# EUROPÄISCHE PATENTSCHRIFT

(11) **EP 1 991 621 B1**
(45) Veröffentlichungstag und Bekanntmachung des Hinweises auf die Patenterteilung: **07.04.2010**
(21) Anmeldenummer: 07702816.5
(22) Anmeldetag: 17.01.2007
(51) Int. Cl.: C09B 57/00, C09B 67/10

(54) **DIKETOPYRROLOPYRROL-PIGMENTE MIT ERHÖHTEN ECHTHEITEN UND VERFAHREN ZU DEREN HERSTELLUNG**
DIKETOPYRROLOPYRROLE PIGMENTS HAVING HEIGHTENED FASTNESSES AND PROCESSES FOR PREPARING THEM
PIGMENTS DICÉTOPYRROLOPYRROLE PRÉSENTANT UN DEGRÉ DE SOLIDITÉ ACCRU, ET LEUR PROCÉDÉ DE PRODUCTION

(30) Priorität: 18.02.2006 DE 102006007621
(43) Veröffentlichungstag der Anmeldung: 19.11.2008
(73) Patentinhaber: Clariant Finance (BVI) Limited, Road Town, Tortola (VG)
(72) Erfinder: GANSCHOW, Matthias, 65195 Wiesbaden (DE); STROHM-ZIMMERMANN, Christiane, 65189 Wiesbaden (DE)
(74) Vertreter: Hütter, Klaus
(86) Internationale Anmeldenummer: PCT/EP2007/000359
(87) Internationale Veröffentlichungsnummer: WO 2007/093260

(56) Entgegenhaltungen:
- EP-A1- 1 101 800
- EP-A2- 0 702 063
- US-A- 3 267 041
- WALLQUIST O: "Diketopyrrolopyrrole (DPP) pigments" HIGH PERFORMANCE PIGMENTS, WILEY-VCH,, DE, 2002, Seiten 159-184, XP009088835

## Beschreibung

Die vorliegende Erfindung betrifft neue, durch bestimmte Partikelgrößenverteilung gekennzeichnete Diketopyrrolopyrrolpigmente hoher Reinheit und hoher Licht- und Wetterechtheit.
1,4-Diketopyrrolo-[3,4-c]-pyrrolpigmente sind seit langem bekannt und werden z.B. in der EP-A-0 094 911 beschrieben.
Diketopyrrolopyrrol-Pigmente zeigen im Allgemeinen in den Anwendungsmedien sehr gute Stabilitäten und Licht- und Wetterechtheiten. Bei der Spritzgusseinfärbung von Polyamiden ist jedoch zum Beispiel beim P.R. 254 ein sehr starker Abbau des Pigments während der Einfärbung zu beobachten.
Für einige hochechte Anwendungen ist es daher gewünscht, Pigmente mit höheren Licht- und Wetterechtheiten und Temperaturstabilitäten einzusetzen. Ein Wechsel von einem verwendeten Diketopyrrolopyrrol-Pigment auf ein Pigment einer anderen Klasse mit höheren Echtheiten und Temperaturstabilitäten führt in den meisten Fällen zu einer starken Änderung der Coloristik und den übrigen anwendungstechnischen Eigenschaften. Die gute Dispergierbarkeit, hohen Farbstärken und reinen Farbtöne der Diketopyrrolopyrrol-Pigmente können schwer mit anderen Pigmenten nachgestellt werden. So wurden bisher die leicht schlechteren Licht- und Wetterechtheiten der DPP-Pigmente im Hinblick auf die übrigen sehr guten anwendungstechnischen Eigenschaften akzeptiert.

Aufgabe der vorliegenden Erfindung war es daher, ein Diketopyrrolopyrrol-Pigment zu entwickeln, das erhöhte Licht- und Wetterechtheiten bei unveränderten coloristischen und anwendungstechnischen Eigenschaften zeigt.

Überraschenderweise wurde gefunden, dass die nachstehend beschriebenen Pigmente diese Aufgaben lösen.

Gegenstand der Erfindung ist ein Diketopyrrolopyrrolpigment der Formel (1) 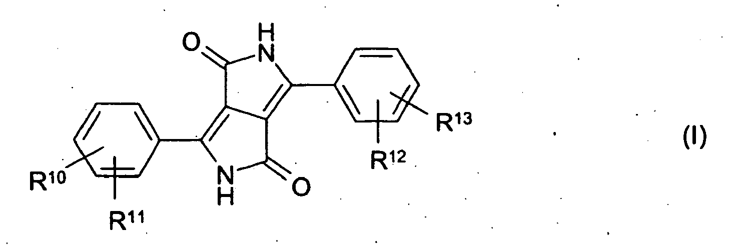 worin
R¹⁰, R¹¹, R¹² und R¹³ unabhängig voneinander Wasserstoff, Halogen, wie beispielsweise Chlor oder Brom, C₁-C₄-Alkyl, wie beispielsweise Methyl, Ethyl oder tert.-Butyl, C₁-C₄-Alkoxy, wie beispielsweise Methoxy, Cyano oder Phenyl bedeuten, gekennzeichnet durch ein erstes Maximum der Häufigkeitsverteilung (nach Gewichtsanteilen) der Kristallgrößen bei oder unter 700 nm und mindestens ein weiteres Maximum der Häufigkeitsverteilung (nach Gewichtsanteilen) der Kristallgrößen, das um mindestens 100 nm oberhalb des ersten Maximums liegt.

Besonders bevorzugt bedeuten
R¹¹ und R¹³ jeweils Wasserstoff, und
R¹⁰ und R¹² sind gleich oder verschieden und bedeuten Wasserstoff, Methyl, tert.-Butyl, Chlor, Cyano oder Phenyl.

Beispiele für bevorzugte Pigmente sind C.I. Pigment Orange 71, 73, 81, Pigment Red 254, 255, 264, 270, 272.

Das erfindungsgemäße Pigment ist dadurch gekennzeichnet; dass die Häufigkeitsverteilung der Kristallgrößen nicht monomodal ist, sondern mehrere Maxima zeigt, vorzugsweise bimodal (zwei Maxima in der Häufigkeitsverteilung) ist.

Bevorzugt sind Teilchenverteilungen, die ein Maximum der Häüfigkeitsverteilung bei kleiner 700 nm (kleinere Teilchensorte) und mindestens ein weiteres um 200 nm größeres, insbesondere ein weiteres um 300 nm größeres Maximum (größere Teilchensorte) besitzen.

Das Maximum der Häufigkeitsverteilung der kleineren Teilchensorte liegt vorzugsweise zwischen 100 und 700 nm, insbesondere zwischen 200 und 600 nm.

Die Teilchen des ersten Verteilungspeaks, d.h. die kleinere Teilchensorte, macht mehr als 20 Gew.-%, bevorzugt mehr als 50 Gew.-%, insbesondere mehr als 70 Gew.-%, der Gesamtteilchen in diesem Pigment aus.
Wenn die beiden Maxima der Häufigkeitsverteilung nahe beieinander liegen und/oder sehr unterschiedliche Größe haben, hat eines der beiden Maxima oftmals nicht die Form eines ausgeprägten Peaks, sondern ist nur als Schulter erkennbar. Im Sinne eines einheitlichen Sprachgebrauchs in der vorliegenden Erfindung wird eine Schulter auch "Maximum" genannt.

Die Synthese des Diketopyrrolopyrrol-Chromophors kann nach bekannten Verfahren erfolgen. Hierbei können die entsprechend substituierten Nitrile analog dem in EP-A-0 094 911 beschriebenen Verfahren mit Bernsteinsäurediestern und starken Basen in einem organischen Lösungsmittel in Gegenwart einer starken Base und bei erhöhter Temperatur umgesetzt werden. Alternativ kann auch ein entsprechend substituiertes Lactam oder Enamin in einem organischen Lösungsmittel in Gegenwart einer starken Base bei erhöhter Temperatur umgesetzt werden (EP-A-0 184 982).
Das nach der Synthese erhaltene Dinatriumsalz des Pigmentes wird durch Hydrolyse in das Pigment überführt. Im Anschluss wird das so erhaltene feinteilige Pigment durch ein erfindungsgemäßes Pigmentfinish (Konditionierung) in die erfindungsgemäße bimodale Form gebracht.

Gegenstand der Erfindung ist daher auch ein Verfahren zur Herstellung der erfindungsgemäßen Diketopyrrolopyrrolpigmente, durch Umsetzung von 1 Mol eines Bemsteinsäure-dicyclohexylesters, -dialkylesters, -monoalkylmonophenylesters, oder -diphenylesters, wobei im Bernsteinsäurerest Alkyl C₁-C₁₈-Alkyl und Phenyl unsubstituiertes oder durch ein oder zwei C₁-C₆₋Alkyl- oder C₁-C₆-Alkoxygruppen substituiertes Phenyl bedeuten, mit 2 Mol eines Gemisches von Nitrilen der Formeln R¹⁰R¹¹C₆H₃-CN und R¹²R¹³C₆H₃-CN, worin R¹⁰, R¹¹, R¹² und R¹³ die vorstehend angegebene Bedeutung haben, wobei im Nitrilgemisch R¹⁰R¹¹C₆H₃-CN und R¹²R¹³C₆H₃-CN im Molverhältnis 100:0 bis 50:50 zueinander stehen;
oder durch Umsetzung von 1 Mol eines Lactams der Formel (II) oder eines Enamins der Formel (III), 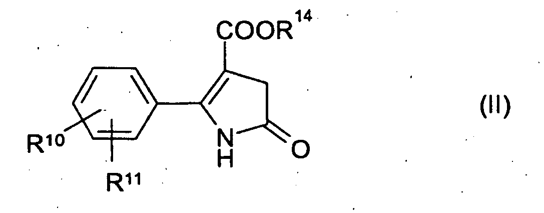 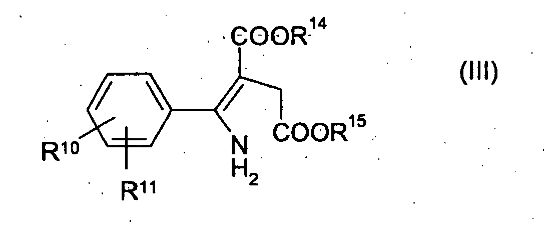 mit einem Mol eines Nitrils der Formel R¹²R¹³C₆H₃-CN;- worin R¹⁰, R¹¹, R¹² und R¹³ die vorstehend angegebene Bedeutung haben und R¹⁴ oder R¹⁵ Alkyl oder Aryl, bevorzugt C₁-C₁₈-Alkyl oder C₆-C₁₀-Aryl, bedeuten;
in einem inerten organischen Lösungsmittel in Gegenwart eines Alkalimetalls oder eines Alkalimetallalkoholats als starke Base bei erhöhter Temperatur zu einem Pigmentalkalisalz und anschließende Freisetzung einer Verbindung der Formel (I) durch Protonierung des entstandenen Pigmentalkalimetallsalzes und nachfolgende Konditionierung, dadurch gekennzeichnet, dass die Konditionierung in einem Lösemittel bei einer Temperatur von mindestens 80°C in Gegenwart von 0,1 bis 10 Gew.-%, vorzugsweise 0,2 bis 9 Gew.-%, insbesondere 0,3 bis 8 Gew.-%, an Impfkristallen einer Verbindung der Formel (I), bezogen auf die theoretische Ausbeute an Pigment ohne Impfkristalle, durchgeführt wird.

Die zur Konditionierung zugesetzten Impfkristalle können nach den oben erwähnten bekannten Verfahren hergestellt werden. Die Impfkristalle der Formel (I) entsprechen zweckmäßigerweise der chemischen Konstitution des herzustellenden Pigments der Formel (I).

Zweckmäßigerweise liegt das Maximum der Häufigkeitsverteilung der Impfkristalle zwischen 100 und 1000 nm, meist jedoch zwischen 150 und 800 nm, vorzugsweise 200 bis 600 nm.
Vorzugsweise verwendet man solche Lösungsmittel, die über 80°C sieden. Als besonders geeignet erweisen sich durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone.wie Cyclohexanon, Ether, wie Ethylenglycolmonomethyl-, -monoethylether oder die entsprechenden Dialkylether, Amide, wie Dimethylformamid oder N-Methylpyrrolidon, sowie Diemthylsulfoxid, Sulfolan oder höhersiedende Alkohole, wie Amylalkohol oder Isobutanol oder Wasser allein, gegebenenfalls unter Druck. Man kann den Pigmentfinish auch in Wasser in Gegenwart von organischen Lösungsmitteln und/oder mit Zusatz von oberflächenaktiven Substanzen durchführen. Besonders bevorzugt sind hochsiedende Alkohole, wie Isobutanol oder Amylalkohol und deren Mischungen mit Wasser.
Die Konditionierung wird vorzugsweise bei Temperaturen zwischen 80 und 180°C, insbesondere zwischen 90 und 150°C, besonders bevorzugt zwischen 110 und 140°C, durchgeführt.
Um ein ausreichendes Kristallwachstum zu ermöglichen, sollte die Konditionierung mindestens 30min, vorzugsweise 1,5 bis 24 h, insbesondere 2 bis 10 h, lang durchgeführt werden.
Die Konditionierung kann bei unterschiedlichen pH-Werten durchgeführt werden, vorzugsweise jedoch bei pH-Werten größer 8.

Die Impfkristalle können direkt vor oder während der Hydrolyse des aus der Pigmentsynthese erhaltenen Pigmentalkalimetallsalzes zum Fällmedium, oder erst vor Beginn oder auch während der Konditionierung in einem oder mehreren Teilen zugegeben werden. Die Impfkristalle können als trockenes Pulver oder als feuchter Presskuchen eingesetzt werden.

Zur oder nach der Konditionierung können noch Hilfsmittel, wie zum Beispiel Tenside, nichtpigmentäre und pigmentäre Dispergiermittel, Farbmittel zum Nuancieren oder Additive zur Steuerung der Rheologie eingesetzt werden.
Die so behandelten Pigmente werden im Allgemeinen anschließend getrocknete und entsprechend dem Anwendungsgebiet konfektioniert.

Die erfindungsgemäßen Pigmente lassen sich zum Pigmentieren von hochmolekularen organischen Materialien natürlicher oder synthetischer Herkunft einsetzen, beispielsweise von Kunststoffen, Harzen, Lacken, Anstrichfarben, Druckfarben, Inkjet-Tinten, insbesondere für den "wide format"-Bereich, Pulverlacken, elektrophotographischen Tonern und Entwicklern und Saatgut. Besonders bevorzugt ist deren Verwendung im Außenbereich, wo eine hohe Licht- und Wetterechtheit erwünscht ist.

### Beispiele

Zur Ermittlung der Häufigkeitsverteilung der kristallinen Teilchen wurden die erhaltenen Pigmente in einem Alkydmelamin-Lacksystem vollständig dispergiert und die Häufigkeitsverteilung in diesem Lacksystem mit Hilfe einer Scheibenzentrifuge ermittelt.

### Messgerät:

Für die Messungen wurden die Scheibenzentrifugen DC24000 bzw. DC20000 der Fa. CPS Instruments, Inc., Stuart, Florida 34997, USA, verwendet.

### Herstellung der Lacke:

Die Lacke wurde folgendermaßen hergestellt: 7,2 g Pigment und 22,8 g Alkydmelamin-Anreibelack (1) wurden zusammen in einer Schüttelmaschine (Disperser DAS 200 K) dispergiert, Dispergierzeit 30 min.

Nach dem Dispergieren wurden 60 g Alkydmelamin-Auflackgemisch (2) zugewogen und weitere 3 min geschüttelt. Nach Abtrennen der Glasperlen wurde insgesamt 1:300 mit einem Gemisch aus 75 g Xylol und 25 g Lackbasis 2-stufig verdünnt und 120 sec im Ultraschallbad beschallt.

Die Zusammensetzung der erwähnten Lacke ist wie folgt:

| | | |
|---|---|---|
| (1) | Alkydmelamin-Anreibelack 35 %ig: | |
| | Vialkyd AC 451 n/70SNB (UCB Resins and Additives) | 50,0 g |
| | Solventnaphtha, Ie | 50,0 g |
| | | |
| (2) | Alkydmelamin-Auflackgemisch 55,8 %ig: | |
| | Vialkyd AC451 n/70SNB (UCB Resins and Additives) | 26,4 g |
| | Vialkyd AC451/60SNA (UCB Resins and Additives) | 29,4 g |
| | Maprenal MF600/55BIB (UCB Resins and Additives) | 35,8 g |
| | Alkydmalamin-Hochsiedegemisch | 6,2 g |
| | Solventnaphtha, Ie | 2,2 g |
| | | |
| (3) | Alkydmalamin-Hochsiedergemisch: | |
| | n-Butanol | 35,0 g |
| | Depanol I | 35,0 g |
| | Butyldiglykol | 30,0 g |
| | | |
| (4) | Lackbasis | |
| | Alkydmalamin-Anreibelack (1) | 300,0 g |
| | Alkydmelamin-Auflackgemisch (2) | 600,0 g |

### Herstellung des Dichtegradienten:

Zur Erzielung eines stabilen Sedimentationsverhaltens wurde im Spinfluid der Scheibenzentrifuge ein Dichtegradient eingestellt. Der Dichtegradient wurde durch Mischung von 40 bis 60 Gew.-% Xylol mit der oben erwähnten Lackbasis eingestellt.

### Durchführung der Messung und Auswertung:

Nach Erreichen der Solldrehzahl von 16000 min⁻¹ Vorlage von 15 ml Spinfluid mit Dichtegradient in der Zentrifugenscheibe. Einspritzen von 0.1 ml Probe. Aufnahme der Sedimentationskurve und Berechnung der Teilchengrößen-Volumenverteilung durch die Software von CPS. Zur korrekten Auswertung unter Berücksichtigung der Mie-Theorie wird der komplexe Brechungsindex des Pigments benötigt. Dieser wurde für 2 Proben durch Ellipsometrie an gepressten Tabletten bei der Fa. L.O.T.-Oriel GmbH in Darmstadt bestimmt. Die ebenso benötigte Dichte der Pigmentteilchen wurde mit einem Gas-Pyknometer (AccuPyc 1330 von Micromeritics) bestimmt.

### Beispiel 1 a (Herstellung der Impfkristalle)

C.I. Pigment Red 254 wird hergestellt, indem 30 Teile p-Chlorbenzonitril analog dem in EP-A-0 94 911 für Beispiel 15-37 beschriebenen Verfahren mit 29,5 Teilen Bernsteinsäurediisopropylester und 30 %igem Natriumamylat (hergestellt aus 9,3 Teilen Natrium und 143 Teilen Amylalkohol) als Base umgesetzt werden.

Das nach diesem Verfahren erhaltene Dinatriumsalz des Pigmentes wird durch Hydrolyse der 80°C heißen Dinatriumsalz-Suspension durch Austragen auf 40°C warmes neutrales Wasser in das Pigment überführt. Im Anschluss erfolgt zur Konditionierung ein Druckfinish der erhaltenen amylalkoholischen/wässrigen Pigment-Hydrolysesuspension für 5 h bei ca. 120°C.
Nach Isolierung und Wäsche mit Methanol und Wasser erhält man ein P.Red 254, dessen monomodale Häufigkeitsverteilung ein Maximum bei 340 nm zeigt.

### Beispiel 1b (Herstellung der Impfkristalle)

P.R. 254 wird wie in Beispiel 1a hergestellt, nur dass der Druckfinish bei 100°C durchgeführt wird. Man erhält ein P.Red 254, dessen monomodale Häufgkeitsverteilung ein Maximum bei 294 nm zeigt.

### Beispiel 2

P.R. 254 wird wie in Beispiel 1a hergestellt, wobei jedoch zum Druckfinish 0,3 Gew.-% (bezogen auf die im Beispiel 1 a erreichte Ausbeute) an P.R. 254 Kristallen aus Beispiel 1a gegeben und der Finish bei 125°C durchgeführt wird. Nach Isolierung und Wäsche erhält man ein Pigment, dessen bimodale Teilchengrößenverteilung ein Maximum bei 390 nm und ein weiteres bei 930 nm zeigt. Die Teilchen des Verteilungspeaks bei 390nm machen ca. 92 Gew.-%, die Teilchen des Verteilungspeaks bei 930 nm machen ca. 8 Gew.-% des Pigmentes aus.

### Beispiel 3

P.R. 254 wird wie in Beispiel 1 a hergestellt, wobei jedoch zum Druckfinish 3,3 Gew.-% (bezogen auf die im Beispiel 1a erreichte Ausbeute) an P.R. 254 Kristallen aus Beispiel 1a gegeben und der Finish bei 135°C durchgeführt wird.

Nach Isolierung und Wäsche erhält man ein Pigment, dessen bimodale Täilchengrößenverteilung ein Maximum bei 480 nm und ein weiteres bei 950 nm zeigt. Die Teilchen des Verteilungspeaks bei 480 nm machen ca. 75 Gew.-%, die Teilchen des Verteilungspeaks bei 950 nm machen ca. 25 Gew.-% des Pigmentes aus.

### Beispiel 4

P.R. 254 wird wie in Beispiel 1 a hergestellt, wobei jedoch zum Druckfinish 6,6 Gew.-% (bezogen auf die im Beispiel 1a erreichte Ausbeute) an P.R. 254 Kristallen aus Beispiel 1a gegeben und der Finish bei 135°C durchgeführt wird.

Nach Isolierung und Wäsche erhält man ein Pigment, dessen bimodale Teilchengrößenverteilung je ein Maximum bei 470 nm und bei 970 nm zeigt. Die Teilchen des Verteilungspeaks bei 470 nm machen ca. 55 Gew.-%, die Teilchen des Verteilungspeaks bei 970 nm machen ca. 45 Gew.-% des Pigmentes aus.

### Beispiel 5

P.R. 254 wird wie in Beispiel 1a hergestellt, wobei jedoch zum Druckfinish 1,0 Gew.-% (bezogen auf die im Beispiel 1 erreichte Ausbeute) an P.R. 254 Kristallen aus Beispiel 1b gegeben wird und der Finish bei 135°C durchgeführt wird.

Nach Isolierung und Wäsche erhält man ein Pigment, deren bimodale Teilchengrößenverteilung ein Maximum bei 260 nm und bei 700 nm zeigt. Die Teilchen des Verteilungspeaks bei 260 nm machen ca. 90 Gew.%, die Teilchen des Verteilungspeaks bei 700 nm machen ca. 10 Gew.-% des Pigmentes aus.

### Beispiel 6 (Wetterechtheit):

Die Bestimmung der Wetterechtheiten erfolgte in HDPE in Anlehnung an DIN EN ISO 4982-1 und -2:1999.
Ein P. Red 254 mit einer monomodalen Teilchenverteilung; deren Maximum bei 290 nm liegt, zeigt im Vergleich zu dem Pigment aus Beispiel 5 eine geringere Wetterechtheit.

## Patentansprüche

1. Diketopyrrolopyrrolpigment der Formel (I) 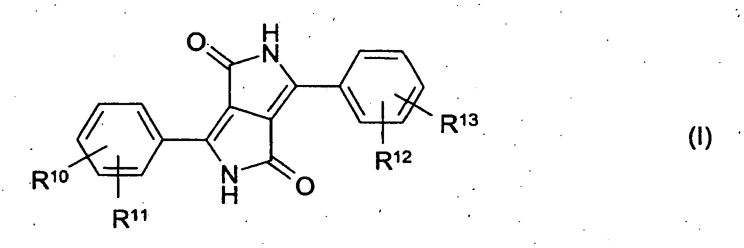 worin
R¹⁰, R¹¹, R¹² und R¹³ unabhängig voneinander Wasserstoff, Halogen, C₁-C₄-Alkyl, C₁-C₄-Alkoxy, cyano oder Phenyl bedeuten, **gekennzeichnet durch** ein erstes Maximum der Häufigkeitsverteilung (nach Gewichtsanteilen) der Kristallgrößen bei oder unter 700 nm und mindestens ein weiteres Maximum der Häufigkeitsverteilung (nach Gewichtsanteilen) der Kristallgrößen, das um mindestens 100 nm oberhalb des ersten Maximums liegt.

2. Pigment nach Anspruch 1, **dadurch gekennzeichnet, dass**
R¹¹ und R¹³ jeweils Wasserstoff, und
R¹⁰ und R¹² gleich oder verschieden sind und Wasserstoff, Methyl, tert.-Butyl, Chlor, Cyano oder Phenyl bedeuten.

3. Pigment nach Anspruch 1 oder 2, **dadurch gekennzeichnet, dass** es aus der Gruppe C.I. Pigment Orange 71, 73, 81, Pigment Red 254, 255, 264, 270 und 272 ausgewählt ist.

4. Pigment nach einem oder mehreren der Ansprüche 1 bis 3, **dadurch gekennzeichnet, dass** das weitere Maximum der Häufigkeitsverteilung um 200 nm oberhalb des ersten Maximums liegt.

5. Pigment nach einem oder mehreren der Ansprüche 1 bis 4, **dadurch gekennzeichnet, dass** das weitere Maximum der Häufigkeitsverteilung um 300 nm oberhalb des ersten Maximums liegt.

6. Pigment nach einem oder mehreren der Ansprüche 1 bis 5, **dadurch gekennzeichnet, dass** das erste Maximum der Häufigkeitsverteilung zwischen 100 und 700 nm liegt.

7. Pigment nach einem oder mehreren der Ansprüche 1 bis 6, **dadurch gekennzeichnet, dass** das erste Maximum der Häufigkeitsverteilung zwischen 200 und 600 nm liegt.

8. Pigment nach einem oder mehreren der Ansprüche 1 bis 7, **dadurch gekennzeichnet, dass** das erste Maximum der Häufigkeitsverteilung mehr als 50 Gew.-% der Gesamtteilchen des Pigments ausmacht.

9. Verfahren zur Herstellung eines Diketopyrrolopyrrolpigments nach einem oder mehreren der Ansprüche 1 bis 8, durch Umsetzung von 1 Mol eines Bemsteinsäure-dicyclohexylesters, -dialkylesters, -monoalkylmonophenylesters, oder -diphenylesters, wobei im Bernsteinsäurerest Alkyl C₁-C₁₈-Alkyl und Phenyl unsubstituiertes oder durch ein oder zwei C₁-C₆-Alkyl- oder C₁-C₆-Alkoxygruppen substituiertes Phenyl bedeuten, mit 2 Mol eines Gemisches von Nitrilen der Formeln R¹⁰R¹¹C₆H₃-CN und R¹²R¹³C₆H₃-CN, worin R¹⁰, R¹¹, R¹² und R¹³ die in Anspruch 1 angegebene Bedeutung haben, wobei im Nitrilgemisch R¹⁰R¹¹C₆H₃-CN und R¹²R¹³C₆H₃-CN im Molverhältnis 100:0 bis 50:50 zueinander stehen; oder durch Umsetzung von 1 Mol eines Lactams der Formel (II) oder eines Enamins der Formel (III). 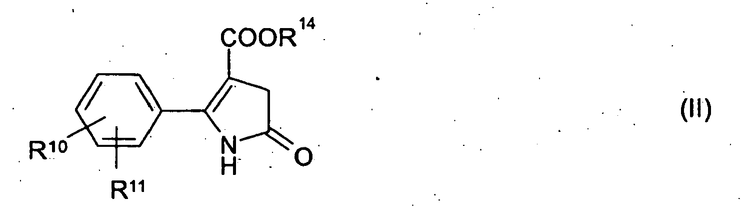 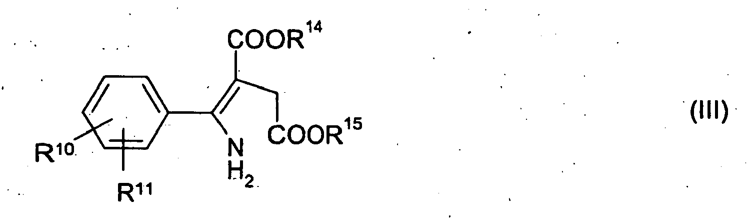 mit einem Mol eines Nitrils der Formel R¹²R¹³C₆H₃-CN; worin R¹⁰, R¹¹, R¹² und R¹³ die vorstehend angegebene Bedeutung haben und R¹⁴ oder R¹⁵ Alkyl oder Aryl bedeuten;
in einem inerten organischen Lösungsmittel in Gegenwart eines Alkalimetalls oder eines Alkalimetallalkoholats als starke Base bei erhöhter Temperatur zu einem Pigmentalkalisalz und anschließende Freisetzung einer Verbindung der Formel (I) durch Protonierung des entstandenen Pigmentalkalimetallsalzes und nachfolgende Konditionierung, **dadurch gekennzeichnet, dass** die Konditionierung in einem Lösemittel bei einer Temperatur von mindestens 80°C in Gegenwart von 0,1 bis 10 Gew.%, vorzugsweise 0,2 bis 9 Gew.-%, insbesondere 0,3 bis 8 Gew.-%, an Impfkristallen einer Verbindung der Formel (I), bezogen auf die theoretische Ausbeute an Pigment ohne Impfkristalle, durchgeführt wird.

10. Verfahren nach Anspruch 9, **dadurch gekennzeichnet, dass** das Maximum der Häufigkeitsverteilung der Impfkristalle zwischen 100 und 1000 nm, vorzugsweise zwischen 150 und 800 nm, insbesondere zwischen 200 und 600 nm, liegt.

11. Verfahren nach Anspruch 9 oder 10, **dadurch gekennzeichnet, dass** die Konditionierung mindestens 30 Minuten lang durchgeführt wird.

12. Verwendung eines Diketopyrrolopyrrolpigment nach einem oder mehreren der Ansprüche 1 bis 8 zum Pigmentieren von hochmolekularen organischen Materialien natürlicher oder synthetischer Herkunft, beispielsweise von Kunststoffen, Harzen, Lacken, Anstrichfarben, Druckfarben, elektrophotographischen Tonern und Entwicklern, Inkjet-Tinten und Saatgut.

## Claims

1. A diketopyrrolopyrrole pigment of formula (I) 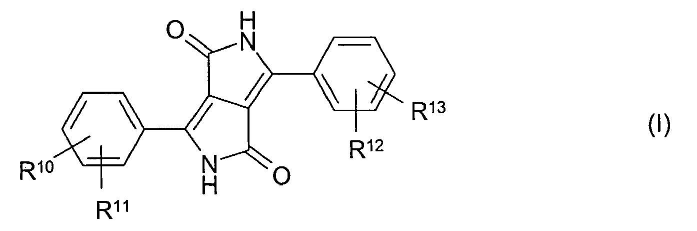 where
R¹⁰, R¹¹, R¹² and R¹³ are independently hydrogen, halogen, C₁-C₄-alkyl, C₁-C₄-alkoxy, cyano or phenyl, **characterized by** a first maximum of the frequency distribution (by weight) of the crystal sizes at or below 700 nm and at least one further maximum of the frequency distribution (by weight) of the crystal sizes that is at least 100 nm above the first maximum.

2. The pigment as claimed in claim 1, **characterized in that**
R¹¹ and R¹³ are each hydrogen, and
R¹⁰ and R¹² are the same or different and are each hydrogen, methyl, tert-butyl, chlorine, cyano or phenyl.

3. The pigment as claimed in claim 1 or 2, **characterized in that** it is selected from the group consisting of C.I. Pigment Orange 71, 73, 81, Pigment Red 254, 255, 264, 270 and 272.

4. The pigment as claimed in one or more of claims 1 to 3, **characterized in that** the further maximum of the frequency distribution is 200 nm above the first maximum.

5. The pigment as claimed in one or more of claims 1 to 4, **characterized in that** the further maximum of the frequency distribution is 300 nm above the first maximum.

6. The pigment as claimed in one or more of claims 1 to 5, **characterized in that** the first maximum of the frequency distribution is between 100 and 700 nm.

7. The pigment as claimed in one or more of claims 1 to 6, **characterized in that** the first maximum of the frequency distribution is between 200 and 600 nm.

8. The pigment as claimed in one or more of claims 1 to 7, **characterized in that** the first maximum of the frequency distribution comprises more than 50% by weight of the total particles of the pigment.

9. A process for producing a diketopyrrolopyrrole pigment as claimed in one or more of claims 1 to 8, by reaction of 1 mol of a dicyclohexyl succinate, dialkyl succinate, monoalkyl monophenyl succinate or diphenyl succinate ester in which alkyl in the succinyl radical is C₁-C₁₈-alkyl and phenyl in the succinyl radical is unsubstituted phenyl or phenyl substituted by one or two C₁-C₆-alkyl or C₁-C₆-alkoxy groups, with 2 mol of a mixture of nitriles of the formulae R¹⁰R¹¹C₆H₃-CN and R¹²R¹³C₆H₃-CN, where R¹⁰, R¹¹, R¹² and R¹³ are each as defined in claim 1, the molar ratio between R¹⁰R¹¹C₆H₃-CN and R¹²R¹³C₆H₃-CN in the nitrile mixture being in the range from 100:0 to 50:50; or by reaction of 1 mol of a lactam of formula (II) or of an enamine of formula (III) 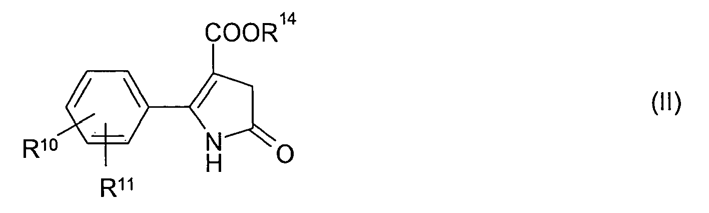 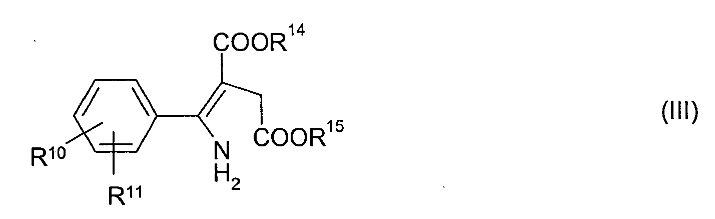 with one mole of a nitrile of the formula R¹²R¹³C₆H₃-CN, where R¹⁰, R¹¹, R¹² and R¹³ are each as defined above and R¹⁴ and R¹⁵ are each alkyl or aryl,
in an inert organic solvent in the presence of an alkali metal or of an alkali metal alkoxide as a strong base at elevated temperature to form a pigment alkali metal salt and subsequent release of a compound of formula (I) by protonation of the resulting pigment alkali metal salt and subsequent conditioning,
**characterized in that** the conditioning is carried out in a solvent at a temperature of at least 80°C in the presence of 0.1% to 10% by weight, preferably 0.2% to 9% by weight and especially 0.3% to 8% by weight of seed crystals of a compound of formula (I), based on the theoretical yield of pigment without seed crystals.

10. The process as claimed in claim 9, **characterized in that** the maximum of the frequency distribution of the seed crystals is between 100 and 1000 nm, preferably between 150 and 800 nm and especially between 200 and 600 nm.

11. The process as claimed in claim 9 or 10, **characterized in that** the conditioning is done for at least 30 minutes.

12. The use of a diketopyrrolopyrrole pigment as claimed in one or more of claims 1 to 8 for pigmentation of high molecular weight organic materials of natural or synthetic origin, for example plastics, resins, coatings, paints, printing inks, electrophotographic toners and developers, inkjet inks and seed.

## Revendications

1. Pigment de dicétopyrrolopyrrole de formule (I) 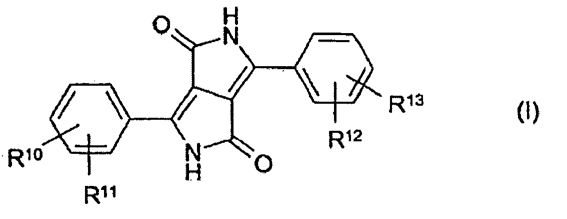 où
R¹⁰, R¹¹, R¹² et R¹³ signifient, indépendamment l'un de l'autre, hydrogène, halogène, C₁-C₄-alkyle, C₁-C₄-alcoxy, cyano ou phényle, **caractérisé par** un premier maximum de la répartition des fréquences (selon les proportions en poids) des grosseurs des cristaux à ou au-dessous de 700 nm et par au moins un autre maximum de la répartition des fréquences (selon les proportions en poids) des grosseurs des cristaux, qui se situe au moins 100 nm au-dessus du premier maximum.

2. Pigment selon la revendication 1, **caractérisé en ce que**
R¹¹ et R¹³ signifient à chaque fois hydrogène, et
R¹⁰ et R¹² sont identiques ou différents et signifient hydrogène, méthyle, tert-butyle, chlore, cyano ou phényle.

3. Pigment selon la revendication 1 ou 2, **caractérisé en ce qu'**il est choisi dans le groupe formé par C.I. Pigment Orange 71, 73, 81, Pigment Red 254, 255, 264, 270 et 272.

4. Pigment selon l'une ou plusieurs des revendications 1 à 3, **caractérisé en ce que** l'autre maximum de la répartition des fréquences se situe 200 nm au-dessus du premier maximum.

5. Pigment selon l'une ou plusieurs des revendications 1 à 4, **caractérisé en ce que** l'autre maximum de la répartition des fréquences se situe 300 nm au-dessus du premier maximum.

6. Pigment selon l'une ou plusieurs des revendications 1 à 5, **caractérisé en ce que** le premier maximum de la répartition des fréquences se situe entre 100 et 700 nm.

7. Pigment selon l'une ou plusieurs des revendications 1 à 6, **caractérisé en ce que** le premier maximum de la répartition des fréquences se situe entre 200 et 600 nm.

8. Pigment selon l'une ou plusieurs des revendications 1 à 7, **caractérisé en ce que** le premier maximum de la répartition des fréquences représente plus de 50% en poids de particules totales du pigment.

9. Procédé pour la préparation d'un pigment de dicétopyrrolopyrrole selon l'une ou plusieurs des revendications 1 à 8, par transformation de 1 mole d'un ester dicyclohexylique d'acide succinique, dialkylique, monoalkylmonophénylique ou diphénylique de l'acide succinique, où, dans le radical acide succinique, alkyle signifie C₁-C₁₈-alkyle et phényle signifie phényle non substitué ou substitué par un ou deux groupes C₁-C₆-alkyle ou C₁-C₆-alcoxy, avec 2 moles d'un mélange de nitriles des formules R¹⁰R¹¹C₆H₃-CN et R¹²R¹³C₆H₃-CN, où R¹⁰, R¹¹, R¹² et R¹³ ont la signification indiquée dans la revendication 1, où, dans le mélange de nitriles R¹⁰R¹¹C₆H₃-CN et R¹²R¹³C₆H₃-CN se trouvent dans un rapport molaire de 100:0 à 50:50 l'un par rapport à l'autre ; ou par transformation de 1 mole d'un lactame de formule (II) ou d'une énamine de formule (III), 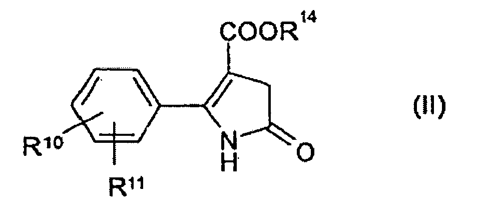 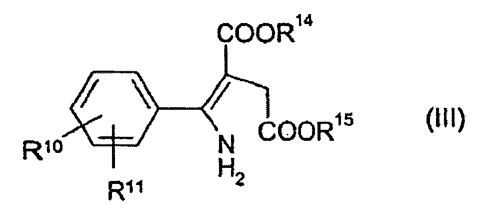 avec une mole d'un nitrile de formule R¹²R¹³C₆H₃-CN ; où R¹⁰, R¹¹, R¹² et R¹³ présentent la signification susmentionnée et R¹⁴ ou R¹⁵ signifient alkyle ou aryle ; dans un solvant organique inerte en présence d'un métal alcalin ou d'un alcoolate de métal alcalin comme base forte à température élevée en un sel de métal alcalin de pigment et libération consécutive d'un composé de formule (I) par protonation du sel de métal alcalin de pigment formé et condensation consécutive **caractérisé en ce que** le conditionnement est réalisé dans un solvant à une température d'au moins 80°C en présence de 0,1 à 10% en poids, de préférence de 0,2 à 9% en poids, en particulier de 0,3 à 8% en poids, de cristaux d'ensemencement d'un composé de formule (I), par rapport au rendement théorique de pigment sans cristaux d'ensemencement.

10. Procédé selon la revendication 9, **caractérisé en ce que** le maximum de la répartition des fréquences des cristaux d'ensemencement se situe entre 100 et 1000 nm, de préférence entre 150 et 800 nm, en particulier entre 200 et 600 nm.

11. Procédé selon la revendication 9 ou 10, **caractérisé en ce que** le conditionnement est réalisé pendant au moins 30 minutes.

12. Utilisation d'un pigment de dicétopyrrolopyrrole selon l'une ou plusieurs des revendications 1 à 8 pour la pigmentation de matériaux organiques de haut poids moléculaire d'origine naturelle ou synthétique, par exemple de matériaux synthétiques, de résines, de laques, de peintures, d'encres d'imprimerie, de toners et de révélateurs électrophotographiques, d'encres pour jet d'encre et de graines.
